# EUROPÄISCHE PATENTANMELDUNG

(11) **EP 2 000 584 A1**
(43) Veröffentlichungstag der Anmeldung: **10.12.2008**
(21) Anmeldenummer: 08154311.8
(22) Anmeldetag: 10.04.2008
(51) Int. Cl.: D07B 1/06

(54) **Verstärkungshybridkord für elastomere Erzeugnisse, insbesondere als Karkasslage oder Gürtellage von Fahrzeugluftreifen**

(30) Priorität: 09.06.2007 DE 102007026774
(71) Anmelder: Continental Aktiengesellschaft, 30165 Hannover (DE)
(72) Erfinder: Justine, Carole, 31515 Wunstorf (DE); Van Barneveld, Claus, Dr., 30827 Garbsen (DE); Wahl, Günter, Dr., 31249 Hohenhameln (DE)
(74) Vertreter: Finger, Karsten

(57) **Zusammenfassung**

Die Erfindung betrifft einen Verstärkungshybridkord (1) für elastomere Erzeugnisse, insbesondere für eine Karkasslage oder eine Gürtellage eines Fahrzeugluftreifens, bestehend aus einer Seele (2) aus wenigstens einem Seelenfilamentgarn, -zwirn oder -kord (3) aus einem hoch-moduligen nicht-metallischen Werkstoff und aus wenigstens vier Stahl-Lagenfilamenten (4), wobei die Stahl-Lagenfilamente (4) um die Seele (2) herum verseilt sind und die Stahl-Lagenfilamente (4) derart eng benachbart zueinander um die Seele (2) herum geschlossen angeordnet sind, so dass sie eine weitestgehend gummiundurchlässige Umhüllung um die Seele (2) bilden und dass die Seele (2) einen derartigen Durchmesser bzw. derartige Querschnittsfläche im Vergleich zum Durchmesser (d₁) bzw. zur Querschnittsfläche der Stahl-Lagenfilamente (4) aufweist, so dass die Stahl-Lagenfilamentumhüllung einen Hohlraum (5) bildet, den die Seele (2) maximal ausfüllt. Der vorliegenden Erfindung liegt die Aufgabe zu Grunde, einen alternativen Verstärkungskord bereitzustellen, der eine hohe Festigkeit und Biegesteifigkeit aufweist, aber dennoch vergleichsweise leicht an Gewicht ist.

## Beschreibung

Die Erfindung betrifft einen Verstärkungshybridkord für elastomere Erzeugnisse, insbesondere für eine Karkasslage oder eine Gürtellage eines Fahrzeugluftreifens, bestehend aus einer Seele aus wenigstens einem Seelenfilamentgarn, -zwirn oder -kord aus einem nicht-metallischen Werkstoff und aus wenigstens drei Stahl-Lagenfilamenten, wobei die Stahl-Lagenfilamente um die Seele herum verseilt sind. Ferner betrifft die Erfindung einen Fahrzeugluftreifen, enthaltend diese Verstärkungshybridkorde in einer Gürtellage und/oder einer Karkasslage.

Verstärkungshybridkorde für elastomere Erzeugnisse, insbesondere für eine Gürtellage oder eine Karkasslage von Fahrzeugluftreifen sind in verschiedenen Konstruktionen bekannt. Zu diesen bekannten Konstruktionen zählen solche, bei denen um eine Seele, welche ein Filament, ein Garn, ein Zwirn oder ein Kord sein kann, wenigstens vier weitere Stahlfilamente verseilt sind. Diese Stahlkordkonstruktionen werden als 1+4 (1xN+4), 1+5 (1xN+5) etc. bezeichnet, wobei N>1. Die Seele besteht aus einem von Stahl abweichendem Material von spezifisch geringerem Gewicht. Die Verstärkungshybridkorde werden alternativ zu reinem Stahlkord eingesetzt, um am Gewicht des Elastomerproduktes einzusparen und im Falle der Anwendung im Reifen durch die Gewichtsersparnis den Rollwiderstand des Reifens zu verringern. Zudem neigen reine Stahlkordkonstruktionen bei nicht vollständiger Gummidurchdringung zur Korrosion, wodurch die Haltbarkeit des Elastomerproduktes reduziert ist. Der Kord hat konstruktiv derart ausgelegt zu sein, dass er die im Betrieb des Elastomerproduktes auftretenden Kräfte hinreichend aufnehmen und übertragen kann.

Der vorliegenden Erfindung liegt die Aufgabe zu Grunde, einen alternativen Verstärkungskord für elastomere Erzeugnisse, insbesondere für eine Karkasslage oder eine Gürtellage eines Fahrzeugluftreifens bereitzustellen, der eine hohe Festigkeit und Biegesteifigkeit aufweist, aber dennoch vergleichsweise leicht an Gewicht ist.

Die Aufgabe wird gelöst, indem die Seele aus einem hoch-moduligen, nicht-metallischen Werkstoff besteht, dass die Stahl-Lagenfilamente derart eng benachbart zueinander um die Seele herum geschlossen angeordnet sind, so dass sie eine weitestgehend gummiundurchlässige Umhüllung um die Seele bilden und dass die Seele einen derartigen Durchmesser bzw. derartige Querschnittsfläche im Vergleich zum Durchmesser bzw. zur Querschnittsfläche der Stahl-Lagenfilamente aufweist, so dass die Stahl-Lagenfilamentumhüllung einen Hohlraum bildet, den die Seele maximal ausfüllt.

Erfindungswesentlich ist, dass die Seele aus einem hoch-moduligen, nicht-metallischen Werkstoff besteht und der Seele eine tragende Funktion zukommt. Das hoch-modulige Material weist einen Elastizitäts-Modul größer als 30GPa auf. Die Seele sollte den durch die Lagenfilamentumhüllung gebildeten Hohlraum maximal ausfüllen. Die Seele kann aber auch mit Spiel innerhalb des von den Stahl-Lagenfilamenten gebildeten Hohlraums angeordnet sein, wobei die Stahl-Lagenfilamente derart eng und gummiundurchlässig als Umhüllung um die Seele herum angeordnet sind, dass bei der Herstellung der Festigkeitsträgerlage, bei der die Korde durch Kalandrieren oder Extrudieren mit Gummimaterial ummantelt werden, kein / kaum Gummimaterial in diesen die Seele umfassenden Hohlraum eindringt. Als "Seele" wird der Kernstrang des Festigkeitsträgers bezeichnet, welcher ein Filament, ein Filamentgarn, Zwirn oder Kord sein kann. "Garne" meint fadenförmige textile Erzeugnisse aus einer Anzahl von Fasern/ Fäden. "Zwirne" meint verdrehte Garne, welche einstufig oder mehrstufig sein können. Ein Eindringen von Gummimaterial in den durch die Lagenfilamentumhüllung gebildeten Hohlraum ist nicht notwendig, da das hoch-modulig, nicht-metallische Seelenmaterial nicht zur Korrosion neigt. Der Kord muss daher nicht mit Gummi durchdrungen sein. Der Hybridkord besitzt eine hohe Zugfestigkeit und einen hohen Modul bei einem im Vergleich zu reinem Stahlkord deutlich reduzierten Gewicht. Es ist ein Hybridkord geschaffen, dem annähernd die Eigenschaften eines reinen Stahlkordes zukommt, der jedoch wesentlich leichter vom Gewicht ist. Hierdurch ist das Elastomerprodukt, in welchem der erfindungsgemäße Kord eingesetzt wird, leichter vom Gewicht, wodurch in Anwendung in einem Reifen dieser einen erwünscht verringerten Rollwiderstand aufweist.
Im Vergleich zu anderen Hybridkorden, beispielsweise ein Kord aus einer Nylon (PA66) - Seele und Stahl-Lagenfilamenten kommt beim erfindungsgemäßen Kord der Seele eine tragende Funktion zu.

In einer vorteilhaften Ausführungsform besteht die Seele bzw. das Seelenfilamentgarn aus einem hoch-moduligem Polymer, vorzugsweise aus vollaromatischem Polyester, vorzugsweise Vectran^{®}. Die vorteilhaften Eigenschaften von Vectran^{®} liegen im hohen Modul, der beispielsweise wesentlich größer als der Modul von PA66 ist. Zudem hat Vectran^{®} einen hohen Schmelzpunkt, der oberhalb von 250°C liegt und Vectran^{®} ist chemisch hoch beständig. Vectran^{®} ist ein vollaromatisches Polyester, welches von der Firma Kuraray AMERICA, INC. hergestellt wird.

In einer anderen vorteilhaften Ausführungsform besteht die Seele bzw. das Seelenfilamentgarn aus Glasfaser. Das Material Glasfaser weist ebenfalls einen hohen Modul und einen sehr hohen Schmelzpunkt auf, zudem verhält sich Glasfaser chemisch inert.

In einer wiederum anderen Ausführungsform besteht die Seele aus wenigstens zwei Seelenfilamentgarnen, welche eine Hybridcord-Seele, vorzugsweise aus Nylon und Aramid, bilden. Hierdurch werden Preisvorteile, beispielsweise gegenüber einer reinen Aramid-Seele, erzielt.

Idealerweise soll das Seelenmaterial den durch die Lagenfilamente gebildeten Hohlraum so weit wie möglich ausfüllen.

Die Erfindung betrifft auch einen Fahrzeugluftreifen mit zumindest einer Verstärkungshybridkorde aufweisenden Gürtel- und/oder Karkasslage, deren Verstärkungskorde zumindest gemäß einem der vorangehenden Ansprüche ausgeführt ist. Die Verstärkungshybridkorde können in Festigkeitsträgerlagen für PKW, als auch für LKW eingesetzt werden. Es sind verschiedenste erfindungsgemäße Kordkonstruktionen möglich.

Die Erfindung wird nun anhand von Zeichnungen, welche schematische Ausführungsbeispiele darstellen, näher erläutert. Dabei zeigen die
Fig. 1 einen Querschnitt durch einen erfindungsgemäß ausgeführten Hybridkord
Fig.2 einen Querschnitt durch einen anderen erfindungsgemäßen Hybridkord
Fig.3 einen Querschnitt durch einen weiteren erfindungsgemäßen Hybridkord.

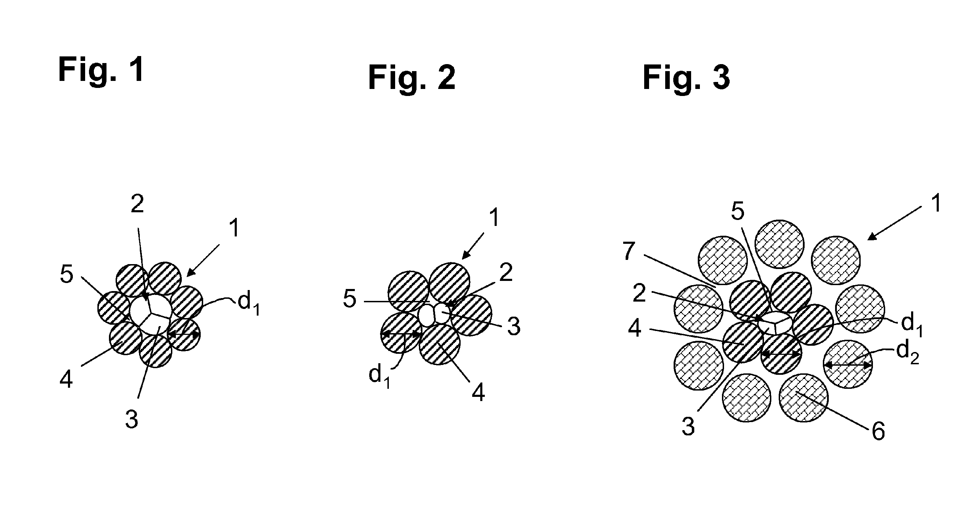

In der **Fig.1** ist ein Querschnitt durch einen erfindungsgemäß ausgeführten Hybridkord dargestellt. Der Hybridkord 1 ist ohne das ihn ummantelnde Gummimaterial dargestellt. Der Verstärkungskord 1 ist ein Kord der Konstruktion 3+7 und besteht aus einer Seele 2 aus drei miteinander verdrehten Filamentgarnen 3 aus Vectran^{®}. Die sieben Stahl-Lagenfilamente 4 sind Stahlfilamente, die parallel zueinander liegend um die Seele 2 herum verseilt sind. Die Stahl-Lagenfilamente 4 sind derart eng zueinander benachbart um die Seele 2 herum geschlossen angeordnet, so dass sie eine weitestgehend gummiundurchlässige Umhüllung um die Seele 2 bilden. Jedes Seelenfilament 3 und somit die Seele 2 hat einen derart gewählten Durchmesser bzw. eine derart gewählte Querschnittsfläche im Vergleich zu demjenigen Durchmesser d1 bzw. derjenigen Querschnittsfläche der Stahl-Lagenfilamente 4, so dass die Stahl-Lagenfilamentumhüllung einen Hohlraum 5 bildet, den die Seele 2 maximal ausfüllt. Die Seele 2, als auch die Stahl-Lagenumhüllung sind beide entweder S- oder Z-gedreht. Hierdurch ist die Gefahr des Frettings möglichst gering gehalten. Während bei herkömmlichen Festigkeitsträgerkonstruktionen die Gummidurchdringung des Kordes erwünscht ist, kann auf die Gummidurchdringung beim erfindungsgemäßen Kord 1 verzichtet werden. Eine Gummidurchdringung ist nicht notwendig, weil Vectran^{®} als nicht-metallischer, hochmoduliger Werkstoff nicht zur Korrosion neigt. Zudem ist die Gummihaftung an Vectran^{®} nicht sehr gut, daher würde in Bezug auf die Haftung bei einer Gummidurchdringung kein Vorteil erzielt werden. Die Seelenfilamente 3 müssen nur geringfügig verdreht sein (Schutzdrall). Jedes Stahl-Lagenfilament 4 weist einen Durchmesser d1 von 0,35 mm auf und ist mit einer Schlaglänge von 18 mm (Twist 56 T/m) verdreht. Ein Durchmesser der Seelenfilamentgarne ist in nur unzureichend anzugeben, da sich die aus Filamentgarn bestehende Seele der Hohlraumform 5 anpasst und dadurch den kreisrunden Querschnitt verliert und somit keine runden Geometrien besitzt. Die Höchstzugkraft liegt zwischen 1000 - 1500N, die Bruchdehnung ist größer als 1,5%.

Die **Fig.2** stellt einen Querschnitt durch einen anderen erfindungsgemäßen, gummiabgedeckten Hybridkord 1 dar. Der Verstärkungskord 1 ist ein Kord der Konstruktion 2+5 und besteht aus einer Seele 2 aus zwei miteinander verdrehten Filamentgarnen 3 aus Glasfaser. Die fünf Stahl-Lagenfilamente 4 sind Stahlfilamente, die parallel zueinander liegend um die Seele 2 herum verseilt sind. Die Seele 2 besteht aus dem hoch-moduligen, nicht-metallischen Werkstoff Glasfaser. Die Stahl-Lagenfilamente 4 sind derart eng zueinander benachbart um die Seele 2 herum geschlossen angeordnet, dass sie eine weitestgehend gummiundurchlässige Umhüllung um die Seele 2 bilden. Jedes Seelenfilament 3 und somit die Seele 2 hat einen derart gewählten Durchmesser bzw. eine derart gewählte Querschnittsfläche im Vergleich zu demjenigen Durchmesser d1 bzw. derjenigen Querschnittsfläche der Stahl-Lagenfilamente 4, so dass die Stahl-Lagenfilamentumhüllung einen Hohlraum 5 bildet, den die Seele 2 möglichst optimal ausfüllt. Die Seele 2, als auch die Stahl-Lagenumhüllung sind zur Vermeidung von Fretting-Erscheinungen beide entweder S- oder Z-gedreht. Während bei herkömmlichen Festigkeitsträgerkonstruktionen die Gummidurchdringung des Kordes bis zur Seele erwünscht ist, ist die Gummidurchdringung beim erfindungsgemäßen Kord bis zur Seele 2 nicht notwendig. Eine Gummidurchdringung des Kordes ist nicht notwendig, da die Seele aus Glasfaser nicht zur Korrosion neigt. Die Seelenfilamente 3 sind mit < 80 T/m verdreht. Die resultierende Seele weist einen Durchmesser von etwa 0,15 - 0,20mm auf, der in etwa halb so groß wie der Durchmesser der Lagenfilamente ist. Ein Durchmesser der Seelenfilamente/-Garne ist in allen erfindungsgemäßen Konstruktionen nur unzureichend anzugeben, da sich die aus Filamentgarn bestehende Seele der Hohlraumform 5 anpasst und dadurch den kreisrunden Querschnitt verliert und somit keine runden Geometrien besitzt. Jedes Stahl-Lagenfilament 4 weist einen Durchmesser von 0,35 mm auf und ist mit 55 T/m weitestgehend gummidicht verdreht. Die Höchstzugkraft liegt zwischen 1200 - 1600N, die Bruchdehnung ist größer als 1,5%.

In der **Fig.3** ist ein Querschnitt durch einen weiteren erfindungsgemäßen, gummiabgedeckten Hybridkord 1 dargestellt. Der Kord 1 ist wie der in Fig.2 beschriebene Kord aufgebaut, weist aber zusätzlich eine weitere radial äußere Lage aus neun Filamenten 6 aus Stahl auf. Die Filamente 6 sind mit 18 T/m verdreht, wobei jedes Filament 6 einen Durchmesser von 0,35 mm aufweist. Die Filamente 6 sind "offen" zueinander angeordnet, so dass Gummi zwischen den durch die beabstandet voneinander angeordneten Filamenten 6 entstehenden Zwischenräumen 7 bis zu den Stahl-Lagenfilamenten 4 vordringen kann und den Kord 1 bis zu den Stahl-Lagenfilamenten 4 durchdringt. Der Kord ist hierdurch sehr fest an das ihn umgebende Gummimaterial angebunden. Durch die gute Gummidurchdringung und Gummibedeckung korrodiert der Festigkeitsträger nicht. Die Höchstzugkraft ist >2000N.

Möglich sind natürlich ebenfalls erfindungsgemäße Kordkonstruktionen, bei denen entweder die Seele Z-gedreht und die Lagenfilamente S-gedreht sind- oder entgegengesetzte Drehungen von Seele und Lagenfilamenten vorliegen.

Die Stahlfilamente können aus Stahl beliebiger Festigkeitsklassen, insbesondere der Festigkeitsklassen NT (normal tensile), HT (high tensile), SHT (super high tensile) oder UHT (ultra high tensile) bestehen. Stahlfilamente der Festigkeitsklasse NT weisen eine Zugfestigkeit von 270 bis 3050 MPa, Stahlfilamente der Festigkeitsklasse HAT weisen eine Zugfestigkeit zwischen 3050 und 3330 MPa, Stahlfilamente der Festigkeitsklasse SHT eine Zugfestigkeit zwischen 3350 und 3650 MPa und Stahlfilamente der Festigkeitsklasse UHT weisen eine Zugfestigkeit über 3650 MPA auf.

### Bezugszeichenliste

- 1: Kord
- 2: Seele
- 3: Seelenfilament, -garn, -zwirn, -kord
- 4: Stahl-Lagenfilament
- 5: Hohlraum
- 6: Filament
- 7: Zwischenraum
- d1: Durchmesser Stahl-Lagenfilament
- d2: Durchmesser Filament

## Patentansprüche

1. Verstärkungshybridkord (1) für elastomere Erzeugnisse, insbesondere für eine Karkasslage oder eine Gürtellage eines Fahrzeugluftreifens, bestehend aus einer Seele (2) aus wenigstens einem Seelenfilamentgarn, -zwirn oder -kord (3) aus einem nicht-metallischen Werkstoff und aus wenigstens vier Stahl-Lagenfilamenten (4), wobei die Stahl-Lagenfilamente (4) um die Seele (2) herum verseilt sind,
**dadurch gekennzeichnet, dass**
die Seele (2) aus einem hoch-moduligen, nicht-metallischen Werkstoff besteht, dass die Stahl-Lagenfilamente (4) derart eng benachbart zueinander um die Seele (2) herum geschlossen angeordnet sind, so dass sie eine weitestgehend gummiundurchlässige Umhüllung um die Seele (2) bilden und
dass die Seele (2) einen derartigen Durchmesser bzw. derartige Querschnittsfläche im Vergleich zum Durchmesser (d₁) bzw. zur Querschnittsfläche der Stahl-Lagenfilamente (4) aufweist, so dass die Stahl-Lagenfilamentumhüllung einen Hohlraum (5) bildet, den die Seele (2) maximal ausfüllt.

2. Verstärkungshybridcord nach Anspruch 1,
**dadurch gekennzeichnet, dass** die Seele (2) aus vollaromatischem Polyester, vorzugsweise Vectran®, besteht.

3. Verstärkungshybridcord nach Anspruch 1,
**dadurch gekennzeichnet, dass** die Seele (2) aus Glasfaser besteht.

4. Verstärkungshybridcord nach Anspruch 1,
**dadurch gekennzeichnet, dass** die Seele (2) aus wenigstens zwei Seelenfilamentgarnen (3) besteht, welche ein Hybridcord, vorzugsweise aus Nylon und Aramid, bilden.

5. Verstärkungshybridcord nach zumindest einem der vorangehenden Ansprüche,
**dadurch gekennzeichnet, dass** der Durchmesser bzw. die Querschnittsfläche der Seele (2) zwischen 0,1 mm und 1,0 mm beträgt.

6. Verstärkungshybridcord nach Anspruch 5,
**dadurch gekennzeichnet, dass** der Durchmesser (d₁) bzw. die Querschnittsfläche eines Stahl-Lagenfilamentes (4) zwischen 0,15 mm und 0,50 mm beträgt.

7. Fahrzeugluftreifen mit zumindest einer Verstärkungshybridcorde aufweisenden Gürtel- und/oder Karkassenlage **dadurch gekennzeichnet, dass** die Verstärkungskorde (1) zumindest gemäß einem der vorangehenden Ansprüche ausgeführt ist.
